(19) Europäisches Patentamt
European Patent Office
Office européen des brevets

(11) EP 3 088 973 B1

(12) EUROPEAN PATENT SPECIFICATION

(45) Date of publication and mention
of the grant of the patent:
**05.12.2018 Bulletin 2018/49**

(51) Int Cl.:
*G05B 19/042* (2006.01)　　　*G05B 17/02* (2006.01)
*G05B 23/02* (2006.01)

(21) Application number: **15166038.8**

(22) Date of filing: **30.04.2015**

(54) **COMPUTER SYSTEM AND METHOD FOR THREE-DIMENSIONAL MONITORING OF THE TECHNICAL STATUS OF A TECHNICAL SYSTEM**

COMPUTERSYSTEM UND VERFAHREN ZUR DREIDIMENSIONALEN ÜBERWACHUNG DES TECHNISCHEN STATUS EINES TECHNISCHEN SYSTEMS

SYSTÈME INFORMATIQUE ET PROCÉDÉ POUR SURVEILLANCE TRIDIMENSIONNELLE DE L'ÉTAT D'UN SYSTÈME TECHNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.11.2016 Bulletin 2016/44**

(73) Proprietor: **R3DT GmbH**
**76131 Karlsruhe (DE)**

(72) Inventors:
• **Kipp, Julien**
**76131 Karlsruhe (DE)**
• **Rüdenauer, Andreas**
**76131 Karlsruhe (DE)**

(74) Representative: **Bittner, Peter et al**
**Peter Bittner und Partner**
**Seegarten 24**
**69190 Walldorf (DE)**

(56) References cited:
**US-A1- 2009 210 071**

**Description**

**Technical Field**

The present invention generally relates to electronic data processing, and more particularly, relates to methods, computer program products and systems for control of technical systems.

**Background**

Current solutions for controlling and monitoring technical systems are typically providing a two-dimensional user interface showing for example a two dimensional plan figure of the technical system (e.g., a top-view of the system). A technical system within the meaning of this document is intended to include systems like multi-component machines (e.g., a hydraulic excavator) up to whole production systems (e.g., a chemical plant). For example, technical components of a chemical plant, such as pipes, pumps, valves, etc. are illustrated as graphical symbols in a schematic two-dimensional plan scheme of the plant. Such a plant scheme includes all functional connections of the various components where the values of critical process parameters are typically shown next to the respective graphical symbols of the technical components. The values are shown as numbers or sometimes as two-dimensional value diagrams illustrating the change of the parameter values over time. "Over time", as used hereinafter, means "in the course of time". In case an incident occurs where a process parameter shows an anomaly an operator may need to check the respective component. It can be important to quickly localize exactly the location of the anomaly within the technical system to prevent malfunctioning of the technical system as a whole. However, standard two-dimensional schemes of the technical system do not provide information for the operator at which physical location the anomaly actually occurs. This may even lead to failure of the technical system because the operator does not get to the physical location of the incident in time. An example of such a prior art system using two-dimensional schemes for the visualization of data from disparate locations involving any number of individual pieces of equipment is disclosed in the US patent application US2009210071.

**Summary**

There is therefore a need to provide systems and methods for supporting operators of technical systems with a real world view of the technical system where the technical status of the technical system or its components can be immediately associated with a physical location.

This problem is solved by a computer system, a computer-implemented method and a computer program product as disclosed in the independent claims. By providing a three-dimensional visualization of technical status parameters in a three-dimensional representation of the technical system the technical parameters are not only associated with the respective physical location within the technical system but can also be monitored over time with regards to their dynamic behavior. For example, a liquid or a gas flow in a pipe system can be visualized with regards to its transportation speed in the system at any point in time.

The computer system for three-dimensional (3D) monitoring of the technical status of a technical system includes one or more interface components configures to enable communication with other systems or components. Such systems or components may be external (e.g., sensor components in the monitored technical system, technical status simulators, etc.) but can also be an integral part of the computer system itself (e.g., I/O means enabling user interaction with the computer system and a user).

The computer system can receive a three-dimensional CAD model of the technical system. The CAD model includes three dimensional CAD representations of one or more technical components of the technical system. At least one particular technical component has a, sectionwise rotation symmetry and performs a physical transportation function characterized by a physical transportation parameter. In other words, the technical system may transport a liquid or gas medium through at least some of its components which can be characterized by a flow speed or flow velocity of the respective medium. In the context of this document medium also includes electrons which are transported by a conducting layer resulting in an electric current.

The computer system further receives parameter values of the physical transportation parameter over time representing the chronological development of the technical status of the at least one particular technical component. Further physical parameters, such as temperature or pressure may characterize the technical status of the respective components and can also be received by the computer system in addition to the transportation parameter. The parameters may be received over time from respective sensors of the technical system while being operated, or from a simulation system simulating the technical status of the technical system over time.

The computer system further has a model transformer component configured to transform the three-dimensional CAD representation of the at least one particular technical component into a corresponding three-dimensional polygonal representation. Thereby, an appropriate tessellation method is used. In one embodiment, the three-dimensional polygonal representation is stored in a polygonal representation storage component. Systems with sufficiently large main memory may store the polygonal representations directly in main memory. The tessellation may be performed according to a predefined scaling factor reflecting the accuracy of the polygonal representation.

In one embodiment, the computer system can allow to modify the scaling factor to adjust the accuracy of the polygonal representation resulting from using the predefined scaling factor. The degree of accuracy affects the time it takes to generate the visual representation of the physical parameters. The modification of the scaling factor can be repeated until a satisfying result is achieved with sufficient accuracy for the 3D visualization providing sufficient rendering performance for real time technical status monitoring.

A monitoring functions component of the computer system allows to associate a monitoring function with the polygonal representation of the at least one particular technical component. The monitoring function is configured to monitor at least the physical transportation parameter characterizing the technical status of the at least one particular technical component. Further monitoring functions can be assigned to the same particular technical component if additional technical status parameters are to be monitored (see above examples).

A direction determination component of the computer system determines, for each vertex of the polygonal representation of the at least one particular technical component, a transportation direction by using the symmetric property. The transportation direction indicates for each vertex of each polygon the spatial course (geometry) of the respective technical component in 3D space, and thereby determines the direction in which the transported medium moves. The spatial course of the technical component may include straight portions and bended portions.

A visual parameter representation computation component of the computer system generates, for each vertex of the polygonal representation of the at least one particular technical component, an animated visual representation of the physical transportation parameter over time in accordance with the determined transportation directions and the received parameter values. The generated representation of the physical transportation parameter over time is then provided to a visualization component where it is visualized for the user. The visual representation may be based on a surface texture flowing in the transportation direction, or it can be based on a particle system with particles moving in the transportation direction. For example, the flowing surface texture can be generated by displacing a texture visualization parameter value for a vertex by the corresponding physical transportation parameter value in the transportation direction.

In one embodiment, a computer program product which is loaded into a memory of the computer system and executed by at least one processor of the computer system causes the computer system to execute steps of a computer implemented method performing the above disclosed functions of the computer system.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

**Brief Description of the Drawings**

FIG. 1 is a simplified block diagram of a computer system for three-dimensional monitoring of the technical status of a technical system according to an embodiment of the invention;

FIG. 2 is a simplified flow chart of a computer-implemented method for three-dimensional monitoring of the technical status of a technical system according to an embodiment of the invention;

FIG. 3 illustrates a skewed and a right cylinder as basic sections of a sectionwise rotation symmetric technical component;

FIGs. 4A to 4C illustrate by example the result of a transformation of a CAD model of a technical component into respective 3D polygonal representations using a tessellation method with different scaling factors according to embodiments of the invention;

FIG. 5 and FIG. 5A illustrate a 3D polygonal representation of a hydraulic system which includes a plurality of technical components for monitoring the respective technical status; and

FIG. 6 is a diagram that shows an example of a generic computer device and a generic mobile computer device, which may be used with the techniques described herein.

**Detailed Description**

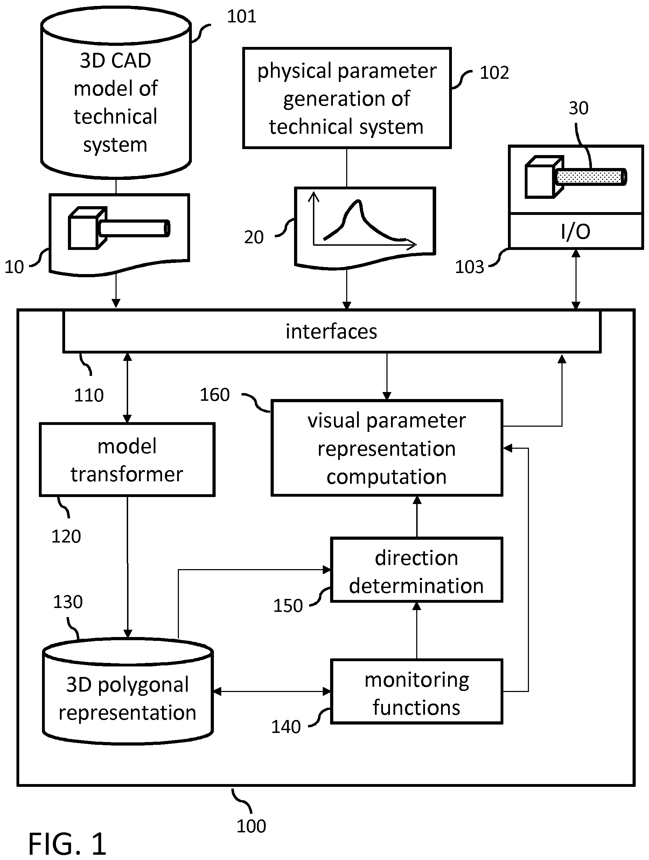

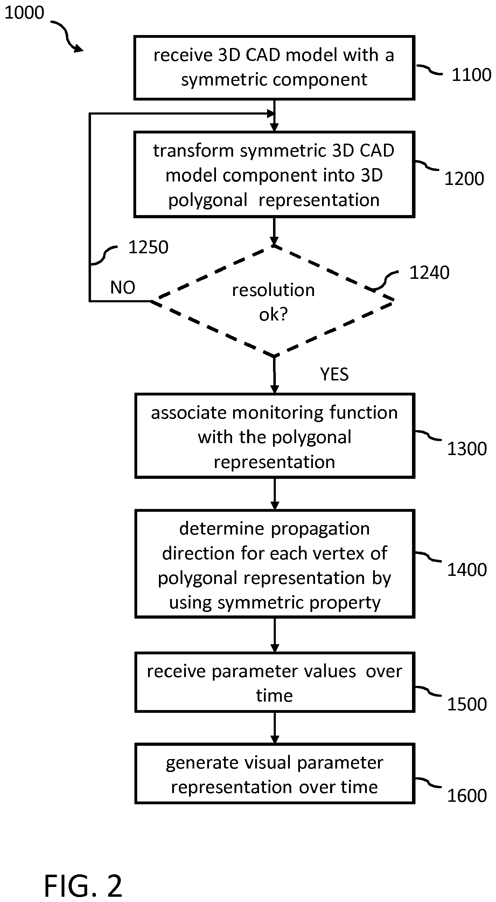

FIG. 1 shows a simplified block diagram of a computer system 100 for solving the technical problem of automatically giving visual indications about the physical conditions of a technical system by three-dimensional monitoring of the technical status of the technical system according to an embodiment of the invention. FIG. 1 will be explained in the context of its use for executing the computer-implemented method 1000 illustrated in FIG. 2.

The computer system 100 has one or more interface components 110 to communicate with external components or systems. The communicative coupling with external components or systems can be implemented by using any appropriate network connection, such as a local area network (LAN) including wireless networks or a wide area network (WAN) like the Internet. A person skilled in the art knows how to implement such connectivity by using appropriate communication protocols.

One interface or a corresponding interface portion of the computer system 100 is configured to receive 1100 three-dimensional Computer Aided Design (CAD) data from a CAD database 101. In the example, the CAD database 101 stores a CAD model 10 of a technical system (illustrated by a three-dimensional cuboid coupled with a three-dimensional cylindrical object, such as a tube) which is received by the computer system 100. Examples of commercially available three-dimensional CAD systems are: the CATIA system offered by Dassault Systèmes, Velizy-Villacoublay Cedex - France, or the AUTOCAD system offered by Autodesk, Inc., San Rafael, CA 94903 USA. Any other three-dimensional CAD system may be used with an appropriate interface. The received three-dimensional CAD model 10 represents a technical system (e.g., a machine or a production line). The CAD model 10 includes three dimensional CAD representations of one or more technical components of the technical system wherein at least one particular technical component has a symmetric property and performs a physical transportation function characterized by a physical transportation parameter. In the example of FIG. 1 the CAD model has a cuboid representation of a first component (e.g., pump, valve, etc.) and a tube shaped representation of a second component (e.g., pipe). For example, the symmetric property can be a sectionwise rotation symmetry as in the case of a pipe. Sectionwise in this context means that the pipe does not need to be a cylindrical object in its entirety but sections of the pipe are of cylindrical shape so that the entire pipe can be approximated by cylindrical sections. In one embodiment, the symmetric property can be a symmetry with respect to a line. For example, a conductive path implemented by a doped layer in a semiconductor for transporting electrons (electric current) through the conductive path would rather show a symmetry with respect to a line than a rotation symmetry.

In a real world scenario the CAD model includes further representations of further technical components. The technical system is configured to transport a liquid or a gas. In other words, the physical transportation function corresponds to the capability of the technical system/components to transport material (liquid, gas) through the technical system/components. This physical transportation function is characterized by a corresponding transportation parameter. For example, the transportation parameter can be the transportation speed vector which characterizes the flow speed and the flow direction of the transported medium (e.g., fluid, gas, electrons, etc.) through the technical components. There may be further technical parameters characterizing the technical status of each of the components. For example, the pressure or temperature of the transported medium can complement the physical transportation parameter to provide more details about the technical status of the various technical components.

The received CAD model data 10 is provided to a model transformer component (MTC) 120. MTC 120 is configured to transform 1200 the three-dimensional CAD representation of at least one particular technical component into a corresponding three-dimensional polygonal representation. For such a transformation the person skilled in the art can use an appropriate tessellation method. Many tessellation methods, such as for example Delaunay Triangulation and Recursive Subdivision, are known in the art. A tessellation of a parametric surface (NURBS surfaces being the most commonly used) is the tiling of such a surface using one or more geometric shapes, often called tiles, with no overlaps and no gaps. The tiles are polygons (e.g., triangles) and a predefined scaling factor can be used to determine an intended tessellation density. The tessellation density reflects the accuracy of the polygonal representation with regards to the original flat surfaces of the received CAD model(s). In other words, the smaller the generated polygons are, the closer the transformed polygonal representation of a particular 3D component comes to the original flat surface of the respective CAD model component.

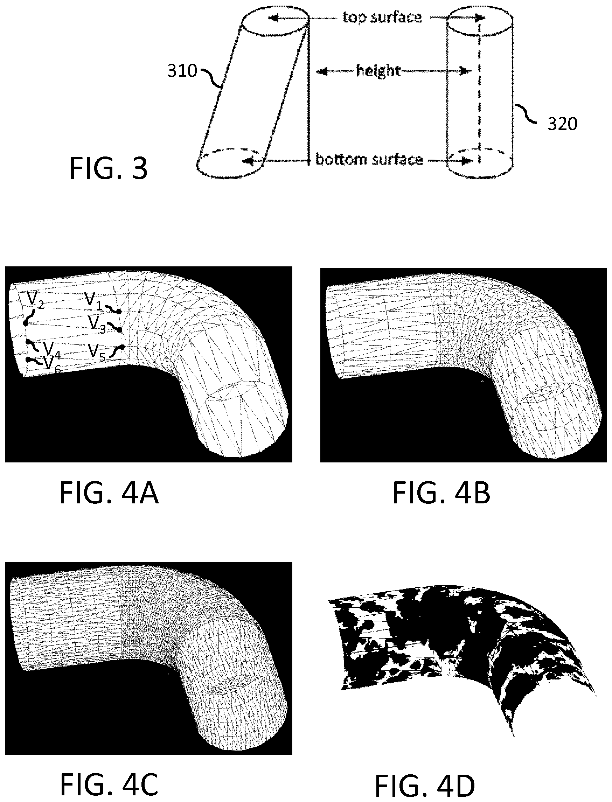

In an optional embodiment, after the initial transformation 1200, a check may be performed 1240 to verify if the resolution of the polygonal representation is sufficient for later visualization purposes. The check 1240 may be performed by a user of the computer system 100 or automatically by an appropriate check tool. Such a check tool may compute surface changes as a measure for errors. If the resolution needs to be increased or decreased, the transforming step can be repeated 1250 with a modified scaling factor to adjust the accuracy of the polygonal representation which affects the time it takes to generate the visual representation of the physical parameters. The higher the resolution, the longer it takes to generate the visual representations. This can be a critical factor in real time 3D monitoring of the technical status of the various system components. Therefore, an appropriate choice of the scaling factor is a tradeoff between a high resolution and, at the same time, fast rendering of the visual representations. The examples given in FIGs. 4A, 4B, and 4C show three polygonal representations as tessellation results of a bent pipe component at three different resolution levels. FIG. 4A uses a lower scaling factor resulting in larger polygonal elements (e.g., triangles) than FIG. 4B (medium scaling factor) and FIG. 4C (higher scaling factor).

Once the MTC 120 has transformed a particular CAD model component into a respective polygonal 3D representation of the technical component with an appropriate scaling factor (e.g., the pre-defined scaling factor) the particular 3D polygonal representation can be stored in a polygonal representation storage component 130 (PRSC) for later use.

The computer system 100 further has a monitoring functions component 140 (MFC) which is configured to associate 1300 a monitoring function with the polygonal representation of the at least one particular technical component. A monitoring function, as used hereinafter, is configured to monitor at least the physical transportation parameter characterizing the technical status of the at least one particular technical component. More than one monitoring function can be associated with a particular polygonal representation of a technical component. For example, one monitoring function can be configured to monitor the flow speed of the medium transported through the technical component. Another monitoring function may be configured to monitor the temperature or pressure of the respective medium. For example, the MFC 140 can include a plurality of pre-defined monitoring functions for monitoring corresponding physical system parameters and provide the possibility that a user of the computer system 100 can select any one of such monitoring functions and assign it to a particular polygonal component representation. For example, such an assignment can be implemented through a drag and drop, drag and relate, or similar user interaction patterns with the computer system (e.g., by using the I/O means 103) and results in the assigned monitoring function being associated with the respective technical component. Any other suitable user interaction method to establish the association between the particular polygonal component representation and the respective one or more monitoring functions may be used.

The computer system further has a direction determination component 150 (DDC) configured to determine 1400, for each polygon of the polygonal representation of the at least one particular technical component, a transportation direction by using the symmetric property of the respective technical component. In other words, the DDC 150 can automatically determine the flow direction of the transported medium for each polygon in the polygonal representation of the technical component. Details of the DDC 150 are disclosed in FIGs. 3 and 4A to 4D.

The one or more interfaces 110 further implement an interface to receive 1500 parameter values 20 of the physical transportation parameter over time from at least one source system 102.The at least one source system is to be understood as the system(s) providing the parameter values to the one or more interfaces. Also other technical status parameters (e.g., temperature, pressure, etc.) can be received via this interface. The received parameter values 20 represent the chronological development of the technical status of the at least one particular technical component.

In one embodiment, the received parameter values 20 over time are measurement values from respective sensors of the technical system while being operated. In other words, sensors can measure in real time (at the sampling rate of the respective sensor) physical parameter values which characterize the physical status of the respective technical component(s). In this embodiment, the source system 102 of the technical parameter values corresponds to the technical system itself which is equipped with respective measurement devices/sensors.

In one embodiment, the one or more interface components 110 implement a functional mockup interface or a VDMA 24583 interface (i.e., an interface which complies with the VDMA 24583 Revision Draft 2012, Title: Gusma - An Integrational Platform For Coupled, Cross-Company Simulation - Revision Draft 2012) configured to receive the parameter values 20 over time from a simulation system simulating the technical status of the technical system over time. The simulation system as a source system 102 for the technical parameter values can provide technical status data for different situations. For example, the system may compute the parameter values under ideal conditions or under certain disturbances. This allows using the computer system 100 during the design phase of the technical system for optimization of the various technical components. The monitoring of the simulated technical system in operation is a technical process on its supporting an improved design of the technical system which can then be operated with ideal parameter values for robust operation. This embodiment can also be combined with the previously disclosed embodiment to compare the real world monitored technical status of a particular technical system component according to the monitored real time sensor data with a simulated technical status of this system component. A deviation outside of a predefined tolerance range can be an indicator for a malfunctioning of the technical system component.

The computer system 100 further has a visual parameter representation computation component 160 (VPRC) configured to generate 1600, for the polygons of the polygonal representation of the at least one particular technical component, an animated visual representation 30 (illustrated by dotted surface) of the physical transportation parameter over time in accordance with the determined transportation directions and the received parameter values 20. In other words, based on the determined transportation directions for each polygon and the received parameter values characterizing the technical status of the transportation function of the particular technical component the VPRC 160 can shift the visual representation 30 of the physical transportation parameter by the respective transportation velocity vector in each polygon at a frequency which corresponds to the flow speed of the transported medium. When providing this data to a visualization component of the computer system (e.g., display of I/O means 103) an animated flow impression is created over time.

In one embodiment, the animated visual representation is using a surface texture flowing in the transportation direction determined by the DDC 150.

In one embodiment, the animated visual representation is using a particle system with particles moving in the transportation direction.

Further details regarding the algorithm for computing three-dimensional texture coordinates to generate the animated visual representations 30 are disclosed in the following.

In one embodiment, the computation makes use of a sectionwise rotation symmetry of the technical components.

In this embodiment, a corresponding algorithm is used for the computation of 3D texture coordinates for the 3D polygonal representations of respective CAD components made up of cylindrical sections. As a result, a transportation behavior (flow behavior) of the transported medium (e.g., fluids, gas, signal currents) or other direction-dependent effects can be displayed in a 3D visualization. The depiction of this flow behavior can be achieved through particles systems or through moving a 3D texture along the surface of the 3D polygonal representations using the calculated texture coordinates.

For example, the individual sections of the 3D polygonal representations can be right cylinders 320 or skewed cylinders 310 as illustrated in FIG. 3. The 3D polygonal representation of a technical component with sectionwise rotation symmetry can then be composed of a plurality of right or skewed cylinder sections wherein each section has a given height.

As mentioned earlier, FIGs. 4A to 4C illustrate by example the result of a transformation of the CAD model of a 90°bent pipe component into respective 3D polygonal representations using a tessellation method with different scaling factors. The example uses triangles as polygons (other polygons may be used instead), wherein each triangle is defined by three vertices (illustrated for the triangles ($V_1$, $V_2$, $V_3$), ($V_2$, $V_3$, $V_4$), ($V_3$, $V_4$, $V_5$), ($V_4$, $V_5$, $V_6$) of FIG. 4A by black dots).

For determining the spatial course (geometry) of a particular technical component the DDC executes a course determination algorithm (CDA) which first identifies a start condition for the algorithm. The start condition for a sectionwise rotation symmetric component is typically a vertex ring referred to as starting ring hereinafter. As the particular technical component fulfills a transport function for a medium, a first assumption by the CDA is that the technical component, and as a consequence also the 3D polygonal representation of the technical component, has "open" ends instead of capped ends. I.e. there is no vertex in the polygonal representation which is not part of a vertex ring. For example, in FIG. 4A, vertices $V_2$, $V_4$, $V_6$ are part of the vertex ring 410. Vertices $V_1$, $V_3$, $V_5$ are part of the vertex ring 420. The CDA can detect the starting ring by the number of triangles a vertex is part of. In the example of the polygons being triangles, vertices that are part of exactly three triangles belong to the starting ring 410. For example, $V_4$ belongs to the triangles ($V_2$, $V_3$, $V_4$), ($V_3$, $V_4$, $V_5$), ($V_4$, $V_5$, $V_6$) and is therefore part of the starting ring 410. Likewise, vertices $V_2$, $V_6$ belong to three respective triangles are therefore part of the starting ring 410. The below pseudo code sections 1.0/1.1 show by way of example how the CDA first counts the number of triangles for each vertex and gets those that have exactly three of them.

**Pseudo code partial algorithm 1.0 (counting triangles)**

```
for all triangles D with the Vertices (V₁, V₂, V₃)
        Increase the counter for each of the vertices V₁, V₂ and V₃ by 1
    end for
```

**Pseudo code partial algorithm 1.1 (saving vertices with 3 triangles)**

```
for all vertices V with the number of triangles s
        if s == 3 then
                add vertex V to T (set of vertices with 3 triangles)
            end if
        end for
```

Now the starting ring 410 for the actual course detection can be determined (cf. pseud code 1.2). Alternatively, the other end of the bent pipe could serve as a starting ring as well because the vertices also belong to three triangles and the CDA can work in both directions.

**Pseudo code partial algorithm 1.2 (choosing the starting point)**

> Add an arbitrary vertex of T to S (set of vertices in starting point)
> **while** further adjacent vertices are being found
> **for all** vertices V from T (algorithm 1.1)
> **if** V is adjacent to at least one vertex from S
> add V to S

> **end if**
> **end for**
> **end while**

Now, the actual course detection can be performed. Every vertex ring 410, 420, 430, etc. of the 3D polygonal representation is traversed (starting from the precomputed set of vertices as the starting ring 410) and for every vertex (Vn) the distance to its successor (Vn+1) in the next vertex ring is computed.

$$\overline{V^n V^{n+1}}(x, y, z) = V^{n+1} - V^n$$

$$dist(V^n, V^{n+1}) = (x^2 + y^2 + z^2)^{\frac{1}{2}}$$

Furthermore the normalized direction $\vec{r}$ between the first two vertex rings 410, 420 is computed for future reference.

$$\vec{r} = \frac{V^0 - V^1}{\|V^0 - V^1\|}$$

This distance and the direction are used to compute desired 3D texture coordinates. The desired 3D texture coordinates represent a virtual position of every vertex in a 3D space where the CAD model (and the respective polygonal representation) has a straight course. In such a shape, all vertices in a vertex ring have the same distance to the subsequent vertex ring. In other words, all the cylindrical sections can be transformed from skewed to right cylinders (cf. FIG. 3). Therefore, the CDA can equalize the computed distances of all k vertices in a vertex ring. This can be done through various functions producing results of varying quality. For example, the computation of an equalized distance d through the maximum function results in relatively high distortions in the later generated 3D texture on the inside of bent surfaces (surface angle < 180°):

$$d = d_k = \max(dist(v_k^n, v_k^{n+1}), d_{k-1}) \qquad \text{where } d_0 = dist(v_0^n, v_0^{n+1})$$

The minimum function on the contrary results in relatively high distortions of the texture on the outside (surface angle > 180°)

$$d = d_k = \min(dist(v_k^n, v_k^{n+1}), d_{k-1}) \qquad \text{where } d_0 = dist(v_0^n, v_0^{n+1})$$

Usage of an average function can provide good balance between the two approaches above, with smaller distortions on both sides:

$$d = \frac{\sum_{i=0}^{k} dist(v_i^n, v_i^{n+1})}{k}$$

For all vertices (starting from the one 420 after the starting ring) a virtual position p'(vn+1) is computed by moving the virtual position of the preceding vertex p'(vn) in direction $\vec{r}$ by the one step earlier computed equalized distance d. From here it is apparent that the resulting coordinates describe a model of the technical component with a straight course, considering each vertex ring is displaced in the same direction $\vec{r}$.

$$p'(v^{n+1}) = p'(v^n) + (d * \vec{r})$$

n = 0 (the first vertex ring 410) relates to:

$$p'(v^0) = p(v^0)$$

$p(v^n)$ being the actual position of vertex v in 3D space

Pseudo code 3.1 summarizes the CDA steps which finally lead to the result that for each vertex of each polygon the course direction (corresponding to the transportation direction of the transported medium in the respective technical component) is determined.

**Pseudo code partial algorithm 1.3 (detect the course)**

```
Initialize the current vertex ring Rn with set S (vertices in starting ring from algorithm 1.2)
Compute general direction r⃗ between the two first vertex rings
while a subsequent ring Rn+1 is being found in the 3D geometry
        for all vertices Vn in ring Rn
                find the successor Vn+1 to Vn in ring Rn+1
                calculate distance between those two
        end for
        calculate average between all distances in the current vertex ring
        for all vertices Vn in ring Rn+1
                calculate the new virtual position p' based on distance to last ring
        end for
end while
```

In the following, two alternative embodiments for generating the animated visual representation of the physical transportation parameter are disclosed. The first example is based on texture visualization.

The above described generation of 3D texture coordinates enables an automatic visualization of direction-dependent effects.

In general, 3D objects can be visualized by projecting two dimensional textures onto the surface of the corresponding 3D visualization using two dimensional texture coordinates. Typically, this involves the manual creation of 2D textures and respective coordinates and the optimization of the 2D textures and coordinates for specific 3D models. By using textures that are defined in 3D space in conjunction with the automatic generation of suitable 3D texture coordinates, the visualization process can be automated.

The visualization may be implemented as follows: Consider p = (x, y, z) the position of a vertex V in 3D space. The CDA described above provides virtual coordinates p' for every vertex in an arbitrary model matching the assumptions that the respective technical component has cylindrical sections with open ends where each vertex is part of a particular vertex ring. It also provides the direction $\vec{r}$. A function tex(u, v, w) that describes a texture in 3D space maps a position in 3D space onto a visualization parameter (e.g., a color value, a pattern type, etc.). Further, the computer system receives the physical transportation parameter values s (e.g., flow speed for the velocity of the transported medium) over time.

During lightning calculation in a graphics pipeline (known by the skilled person as the step where usually the texture is being projected onto the surface) of vertex v with the actual position p, now, the virtual position p' is used instead. In addition, this value is being displaced in direction $\vec{r}$. The displacement is computed using the physical transportation parameter values (flow speed) over time. The displaced value is now used to access the texture value at this specific point in space.

$$\text{visualization parameter value} = \text{tex}(p' + s * t * \vec{r})$$

The displacement over time produces the desired flow behavior in the visualization. The usage of the precomputed texture coordinates creates a flow along the bent object surface. A snapshot of the generated transportation parameter visualization is shown in FIG. 4D. In the example, only black and white texture colors are shown. However, in a real visualization the black and white areas correspond to many different color values which can represent different physical parameter values as technical status indicators for the respective technical component.

The second example for the alternative embodiments for generating the animated visual representation of the physical transportation parameter is based on particle visualization. In general, a particle system is a tool used in computer graphics to accomplish the visualization of smoke, fire, water or similar effects. It uses a high number of objects (particles) that move over time and can be displayed with several common methods (including a 2D texture). The movement of the particles can be either manually predefined, or computed through complex physics simulations. In this embodiment, the algorithm only needs to output the direction between each pair of vertex rings to lead the particles along the course of the model to create the desired flow behavior (e.g. moving electron representations along a cable to visualize electric current).

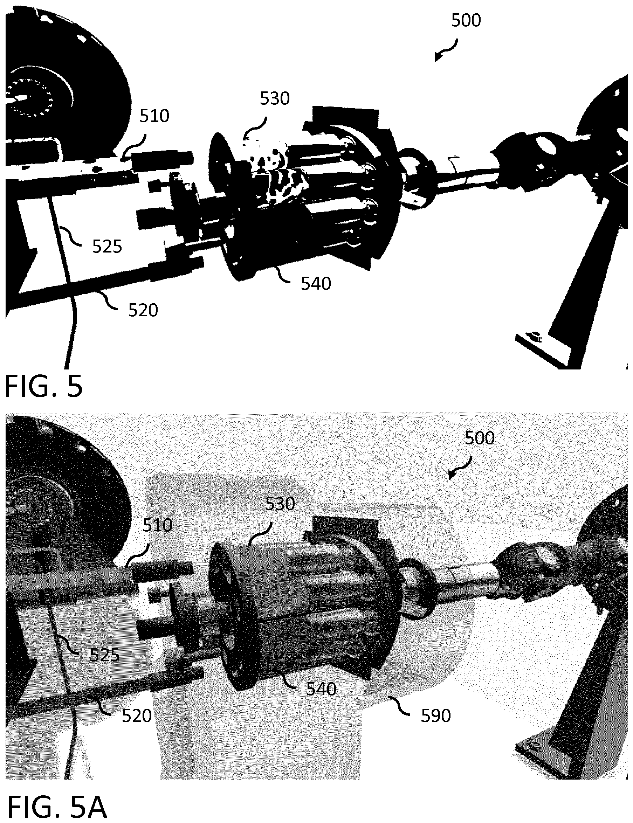

FIG. 5 and FIG. 5A illustrate a 3D polygonal representation of a hydraulic system 500 which includes a plurality of technical components, such as for example, pipes 510, 520, 525 and hydraulic piston cylinders 530, 540. FIGs. 5 and 5A show the same system 500 where FIG. 5 is pure black and white and FIG. 5A includes a greyscale which improves the visibility of the previously described visualization effects. Further, FIG. 5A also shows the housing 590 of the piston cylinders in a transparent visualization (not visible in the black and white version of FIG. 5). Pipe 510 has a different surface texture (generated according to the previously described embodiments of the invention) compared to the surface texture of pipe 520 or pipe 525. This indicates that the technical status of each pipe is different. The movement of the surface textures visualizes the flow speed of the medium transported by the pipes. In other words, the positional changes of the transported medium can be illustrated over time. Each pipe texture may move according to a different flow speed. Further physical parameter values may be visualized by the generated visualization structure. For example, the temperature values for the transported medium can be visualized by the color computed for the texture at the respective vertices. For example, the dark color of the pipes 520, 525 and the cylinder piston 540 may correspond to red indicating a temperature which is higher than the temperature in pipe 510 and piston cylinder 530 having a relatively bright color (e.g., light blue).

As a result, the monitoring system can, at any time, monitor technical status parameters reflecting the status of a technical system in a three-dimensional manner so that the exact physical location of any deviation from the desired technical status is immediately visible for an operator. By using the disclosed visualization methods of the physical transportation parameter combined with colorizing the visualization (e.g., texture) according to a further technical status parameter the system can visualize at least the technical status for two dimensions. A first dimension thereby by is the transportation parameter (e.g., flow speed, velocity, electric current flow, etc.) of the transported medium which can be combined with at least a second dimension selected from complementary physical parameters (e.g., pressure, temperature, voltage, etc.). In this embodiment, the monitoring system allows to simultaneously monitor at least two critical operating parameters of the technical system with regards to the physical locations inside the technical system at any point in time.

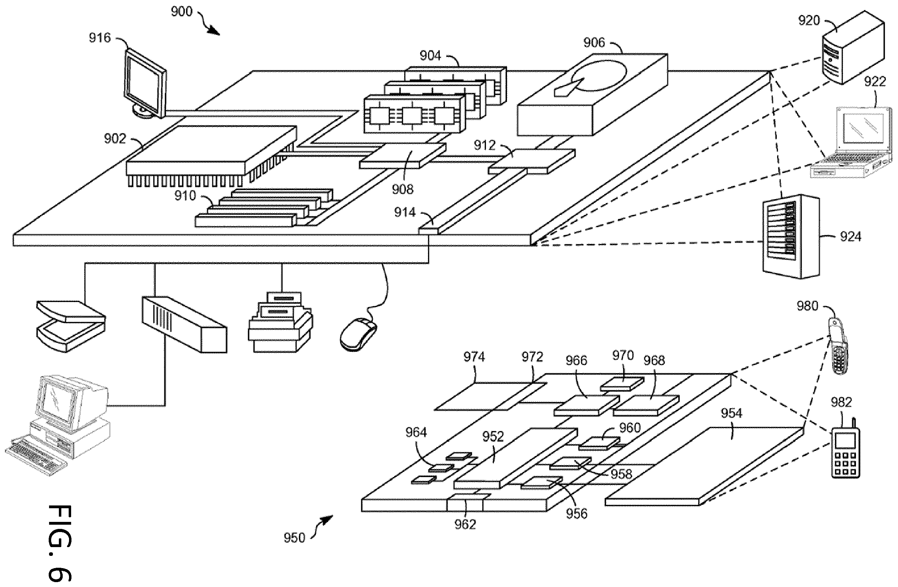

FIG. 6 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may 900 correspond to the computer system 100 of FIG. 1. Computing device 950 is intended to represent various forms of mobile devices, such as personal digital assistants, cellular telephones, smart phones, and other similar computing devices. For example, computing device 950 may include the I/O means 103 as shown in FIG. 1. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

**Claims**

1. A computer system (100) for three-dimensional monitoring of the technical status of a technical system, comprising:

    one or more interface components (110) configured:

        to receive a three-dimensional CAD model (10) of the technical system, the CAD model (10) including three dimensional CAD representations of one or more technical components of the technical system wherein at least one particular technical component has sections with cylindrical shape configured to approximate the at least one particular technical component, hereafter referred to as the symmetric property, and the at least one particular technical component performs a physical transportation function **characterized by** a physical transportation parameter;
        to receive parameter values (20) of the physical transportation parameter in the course of time, also referred to as over time, representing the chronological development of the technical status of the at least one particular technical component; and
        to provide a visual representation (30) of the physical transportation parameter over time to a visualization component (103);

    a model transformer component (120) configured to transform, using tessellation, the three-dimensional CAD representation of the at least one particular technical component into a corresponding three-dimensional polygonal representation;
    a monitoring functions component (140) configured to associate a monitoring function with the polygonal representation of the at least one particular technical component wherein the monitoring function is configured to monitor at least the physical transportation parameter characterizing the technical status of the at least one particular technical component;
    a direction determination component (150) configured to determine, for each vertex of the polygonal representation of the at least one particular technical component, a transportation direction by using the symmetric property; and
    a visual parameter representation computation component (160) configured to generate, for each vertex of the polygonal representation of the at least one particular technical component, an animated visual representation (30) of the physical transportation parameter over time in accordance with the determined transportation directions and the received parameter values (20).

2. The computer system of claim 1, wherein the visual representation is using a surface texture flowing in the transportation direction, or wherein the visual representation is using a particle system with particles moving in the transportation direction.

3. The computer system of any one of the previous claims, wherein the one or more interface components (110) are configured to receive the parameter values over time from respective sensors of the technical system while being operated.

4. The computer system of any one of the previous claims, wherein the one or more interface components (110) implement a functional mockup interface or a VDMA 24583 interface configured to receive the parameter values over time from a simulation system simulating the technical status of the technical system over time.

5. A computer-implemented method (1000) for three-dimensional monitoring of the technical status of a technical system, comprising:

    receiving (1100) a three-dimensional CAD model (10) of the technical system, the CAD model including (10) three dimensional CAD representations of one or more technical components of the technical system wherein at least one particular technical component has sections with cylindrical shape configured to approximate the at least one particular technical component, hereafter referred to as the symmetric property, and the at least one particular technical component performs a physical transportation function **characterized by** a physical transportation parameter;
    transforming (1200), using tessellation, at least the three-dimensional CAD representation of the particular technical component into a corresponding three-dimensional polygonal representation;
    associating (1300) a monitoring function with the polygonal representation of the particular technical component wherein the monitoring function is configured to monitor at least the physical transportation parameter characterizing the technical status of the particular technical component;
determining (1400), for each vertex of the polygonal representation of the at least one particular technical component, a transportation direction by using the symmetric property;
receiving (1500) parameter values (20) of the physical transportation parameter over time representing the chronological development of the technical status of the at least one particular technical component; and
generating (1600), for each vertex of the polygonal representation of the at least one particular technical component, an animated visual representation (30) of the physical transportation parameter in the course of time, also referred to as over time, in accordance with the determined transportation directions and the received parameter values.

6. The method of claim 5, wherein transforming (1200) is performed according to a scaling factor reflecting the accuracy of the polygonal representation, the method further comprising:
repeating (1250) the transforming step with a modified scaling factor to adjust the accuracy of the polygonal representation affecting the time it takes to generate the visual representation of the physical parameters.

7. The method of any one of the claims 5 to 6, wherein the visual representation is using a surface texture flowing in the transportation direction.

8. The method of claim 7, wherein the flowing surface texture is generated by displacing a texture visualization parameter value for a vertex by the corresponding physical transportation parameter value in the transportation direction.

9. The method of any one of the claims 5 to 6, wherein the visual representation is using a particle system with particles moving in the transportation direction.

10. The method of any one of the claims 5 to 9, wherein the parameter values over time are received from respective sensors of the technical system while being operated.

11. The method of any one of the claims 5 to 10, wherein the parameter values over time are received, via a functional mockup interface or via a VDMA interface , from a simulation system simulating the technical status of the technical system over time.

12. The method of any one of the claims 5 to 11, wherein a further technical status parameter is received, the further technical status parameter characterizing a further dimension of the technical status of the at least one particular technical component, and the further technical status parameter is visualized simultaneously with the animated visual representation (30) in a corresponding combined visual representation.

13. A computer program product having instructions that when loaded into a memory of a computing device and executed by at least one processor of the computing device cause the computing device to execute the steps of the computer implemented method according to any one of the claims 5 to 12.

**Patentansprüche**

1. Computersystem (100) zum dreidimensionalen Überwachen des technischen Zustands eines technischen Systems, umfassend:

eine oder mehrere Schnittstellenkomponenten (110), konfiguriert zum:

Empfangen eines dreidimensionalen CAD-Modells (10) des technischen Systems, wobei das CAD-Modell (10) dreidimensionale CAD-Darstellungen einer oder mehrerer technischer Komponenten des technischen Systems beinhaltet, wobei mindestens eine bestimmte technische Komponente Abschnitte mit zylindrischer Form aufweist, die konfiguriert ist zum Approximieren an die mindestens eine bestimmte technische Komponente, nachstehend als die symmetrische Eigenschaft bezeichnet, und die mindestens eine bestimmte technische Komponente eine physikalische Transportfunktion erfüllt, **gekennzeichnet durch** einen physikalischen Transportparameter;
Empfangen von Parameterwerten (20) des physikalischen Transportparameters im Laufe der Zeit, auch als über die Zeit bezeichnet, die die chronologische Entwicklung des technischen Zustands der mindestens einen bestimmten technischen Komponente darstellen; und

Bereitstellen einer visuellen Darstellung (30) des physikalischen Transportparameters über die Zeit an eine Visualisierungskomponente (103);

eine Modellumformkomponente (120), die konfiguriert ist zum Umformen der dreidimensionalen CAD-Darstellung der mindestens einen bestimmten technischen Komponente in eine entsprechende dreidimensionale polygonale Darstellung unter Verwendung von Tesselierung;

eine Überwachungsfunktionskomponente (140), die konfiguriert ist zum Zuordnen einer Überwachungsfunktion der polygonalen Darstellung der mindestens einen bestimmten technischen Komponente, wobei die Überwachungsfunktion konfiguriert ist zum Überwachen mindestens des physikalischen Transportparameters, der den technischen Zustand der mindestens einen bestimmten technischen Komponente kennzeichnet;

eine Richtungsbestimmungskomponente (150), die konfiguriert ist zum Bestimmen einer Transportrichtung unter Verwendung der symmetrischen Eigenschaft für jeden Eckpunkt der polygonalen Darstellung der mindestens einen bestimmten technischen Komponente; und

eine Berechnungskomponente (160) für die visuelle Parameterdarstellung, die konfiguriert ist zum Erzeugen einer animierten visuellen Darstellung (30) der physikalischen Transportparameter über die Zeit nach den festgelegten Transportrichtungen und den empfangenen Parameterwerten (20) für jeden Eckpunkt der polygonalen Darstellung der mindestens einen bestimmten technischen Komponente.

2. Computersystem nach Anspruch 1, wobei die visuelle Darstellung eine Oberflächentextur verwendet, die in der Transportrichtung fließt, oder wobei die visuelle Darstellung ein Partikelsystem verwendet, dessen Partikel sich in der Transportrichtung bewegen.

3. Computersystem nach einem der vorhergehenden Ansprüche, wobei die eine oder die mehreren Schnittstellenkomponenten (110) konfiguriert sind zum Empfangen der Parameterwerte von entsprechenden Sensoren des technischen Systems während des Betriebs im Laufe der Zeit.

4. Computersystem nach einem der vorhergehenden Ansprüche, wobei die eine oder mehreren Schnittstellenkomponenten (110) eine funktionale Mockup-Schnittstelle oder eine VDMA 24583-Schnittstelle implementieren, die konfiguriert ist zum Empfangen der Parameterwerte von einem Simulationssystem im Laufe der Zeit, das den technischen Zustand des technischen Systems im Laufe der Zeit simuliert.

5. Computerimplementiertes Verfahren (1000) zum dreidimensionalen Überwachen des technischen Zustands eines technischen Systems, umfassend:

Empfangen (1100) eines dreidimensionalen CAD-Modells (10) des technischen Systems, wobei das CAD-Modell (10) dreidimensionale CAD-Darstellungen einer oder mehrerer technischer Komponenten des technischen Systems beinhaltet, wobei mindestens eine bestimmte technische Komponente Abschnitte mit zylindrischer Form aufweist, die konfiguriert sind, um sich der mindestens einen bestimmten technischen Komponente anzunähern, die nachfolgend als symmetrische Eigenschaft bezeichnet wird, und die mindestens eine bestimmte technische Komponente eine physikalische Transportfunktion ausführt, die durch einen physikalischen Transportparameter gekennzeichnet ist;

Umformen (1200) mindestens der dreidimensionalen CAD-Darstellung der bestimmten technischen Komponente unter Verwendung von Tesselierung in eine entsprechende dreidimensionale polygonale Darstellung;

Zuordnen (1300) einer Überwachungsfunktion zu der polygonalen Darstellung der bestimmten technischen Komponente, wobei die Überwachungsfunktion konfiguriert ist zum Überwachen mindestens des physikalischen Transportparameters, der den technischen Zustand der bestimmten technischen Komponente kennzeichnet;

Bestimmen (1400) einer Transportrichtung für jeden Eckpunkt der polygonalen Darstellung der mindestens einen bestimmten technischen Komponente unter Verwendung der symmetrischen Eigenschaft;

Empfangen (1500) von Parameterwerten (20) des physikalischen Transportparameters im Laufe der Zeit, die die chronologische Entwicklung des technischen Zustands der mindestens einen bestimmten technischen Komponente darstellen; und

Erzeugen (1600) einer animierten visuellen Darstellung (30) des physikalischen Transportparameters im Laufe der Zeit, auch als über die Zeit bezeichnet, nach den festgelegten Transportrichtungen und den empfangenen Parameterwerten für jeden Eckpunkt der polygonalen Darstellung der mindestens einen bestimmten technischen Komponente.

6. Verfahren nach Anspruch 5, wobei das Umformen (1200) nach einem Skalierungsfaktor durchgeführt wird, der die Genauigkeit der polygonalen Darstellung widerspiegelt, wobei das Verfahren ferner Folgendes umfasst:

Wiederholen (1250) des Umformungsschritts mit einem modifizierten Skalierungsfaktor, um die Genauigkeit der polygonalen Darstellung anzupassen, die sich auf die Zeit auswirkt, die zum Erzeugen der visuellen Darstellung der physikalischen Parameter benötigt wird.

7. Verfahren nach einem der Ansprüche 5 bis 6, wobei die visuelle Darstellung eine in Transportrichtung fließende Oberflächentextur verwendet.

8. Verfahren nach Anspruch 7, wobei die fließende Oberflächentextur erzeugt wird, indem ein Texturvisualisierungsparameterwert für einen Eckpunkt um den entsprechenden physikalischen Transportparameterwert in Transportrichtung verschoben wird.

9. Verfahren nach einem der Ansprüche 5 bis 6, wobei die visuelle Darstellung ein Partikelsystem mit Partikeln verwendet, die sich in Transportrichtung bewegen.

10. Verfahren nach einem der Ansprüche 5 bis 9, wobei die Parameterwerte im Laufe der Zeit von jeweiligen Sensoren des technischen Systems während des Betriebs empfangen werden.

11. Verfahren nach einem der Ansprüche 5 bis 10, wobei die Parameterwerte im Laufe der Zeit über eine funktionale Mockup-Schnittstelle oder über eine VDMA-Schnittstelle von einem Simulationssystem empfangen werden, das den technischen Zustand des technischen Systems im Laufe der Zeit simuliert.

12. Verfahren nach einem der Ansprüche 5 bis 11, wobei ein weiterer technischer Zustandsparameter empfangen wird, wobei der weitere technische Zustandsparameter eine weitere Dimension des technischen Zustands der mindestens einen bestimmten technischen Komponente kennzeichnet und der weitere technische Zustandsparameter gleichzeitig mit der animierten visuellen Darstellung (30) in einer entsprechenden kombinierten visuellen Darstellung visualisiert wird.

13. Computerprogrammprodukt mit Anweisungen, die beim Laden in einen Speicher einer Computervorrichtung und dem Ausführen von mindestens einem Prozessor der Computervorrichtung bewirken, dass die Computervorrichtung die Schritte des computerimplementierten Verfahrens nach einem der Ansprüche 5 bis 12 ausführt.

**Revendications**

1. Système informatique (100) destiné au suivi tridimensionnel du statut technique d'un système technique, comprenant :

   au moins un composant d'interface (110) configuré :

      pour recevoir un modèle de DAO tridimensionnel (10) du système technique, le modèle de DAO tridimensionnel (10) comprenant des représentations de DAO tridimensionnel d'au moins un élément technique du système technique dans lequel au moins un élément technique présente des sections de forme cylindrique, configuré pour se rapprocher de l'au moins un élément technique particulier, qu'on appelle propriété de symétrie par la suite, et l'au moins un élément technique particulier effectuant une fonction de transport physique, **caractérisé par** un paramètre de transport physique ;
      pour recevoir des valeurs de paramètre (20) du paramètre de transport physique au cours du temps, qu'on appelle aussi au fil du temps, représentant le développement chronologique du statut technique de l'au moins un élément technique particulier ; et
      pour fournir une représentation visuelle (30) du paramètre de transport physique au cours du temps à un élément de visualisation (103) ;

   un composant de transformation de modèle (120), configuré pour transformer, grâce à une tessellation, la représentation tridimensionnelle en DAO de l'au moins un élément technique particulier en une représentation polygonale tridimensionnelle correspondante ;
   un composant de fonctions de surveillance (140), configuré pour associer une fonction de suivi à la représentation polygonale de l'au moins un élément technique particulier, la fonction de surveillance étant configurée pour suivre au moins le paramètre de transport physique caractérisant le statut technique de l'au moins un élément technique particulier ;

un composant de détermination de direction (150) configuré pour déterminer, pour chaque sommet de la représentation polygonale de l'au moins un élément technique particulier, une direction de transport par usage de la propriété de symétrie ; et

un composant de calcul de représentation de paramètre visuel (160), configuré pour produire, pour chaque sommet de la représentation polygonale de l'au moins un élément technique, une représentation visuelle animée (30) du paramètre de transport physique au cours du temps, conformément aux direction déterminées de transport et des valeurs reçues de paramètre (20).

2. Système informatique selon la revendication 1, dans lequel la représentation visuelle utilise une texture de surface s'écoulant dans la direction de transport, ou dans lequel la représentation visuelle utilise un système à particules, comportant des particules se déplaçant dans la direction de transport.

3. Système informatique selon l'une quelconque des revendications précédentes, dans lequel l'au moins un composant d'interface (110) est configuré pour recevoir les valeurs de paramètre au cours du temps à partir de capteurs respectifs du système technique lors de son fonctionnement.

4. Système informatique selon l'une quelconque des revendications précédentes, dans lequel l'au moins un composant d'interface (110) implémente une interface fonctionnelle de simulation ou une interface VDMA 24583, configurée pour recevoir les valeurs de paramètre au cours du temps à partir d'un système de simulation simulant le statut technique du système technique au cours du temps.

5. Procédé implémenté par ordinateur (1000) destiné au suivi tridimensionnel du statut technique d'un système technique, comprenant :

la réception (1100) d'un modèle de DAO tridimensionnel (10) du système technique, le modèle de DAO comprenant (10) trois représentations de DAO tridimensionnel d'au moins un élément technique du système technique dans lequel au moins un élément technique particulier comporte des sections de forme cylindrique configurées pour se rapprocher de l'au moins un élément technique particulier, qu'on appelle ici propriété de symétrie, et où l'au moins un élément technique particulier effectue une fonction de transport physique, **caractérisée par** un paramètre de transport physique ;

la transformation (1200), par tessellation, d'au moins la représentation de DAO tridimensionnel de l'élément technique particulier en une représentation polygonale tridimensionnelle ;

l'association (1300) d'une fonction de suivi avec la représentation polygonale de l'élément technique particulier, la fonction de surveillance étant configurée pour suivre au moins le paramètre physique de transport caractérisant le statut technique de l'élément technique particulier ;

la détermination (1400), pour chaque sommet de la représentation polygonale de l'au moins un élément technique particulier, d'une direction de transport par utilisation de la propriété de symétrie ;

la réception (1500) de valeurs de paramètres (20) du paramètre physique de transport au cours du temps, représentant le développement chronologique du statut technique de l'au moins un composant technique particulier ; et

la production (1600), pour chaque sommet de la représentation polygonale de l'au moins un élément technique particulier, d'une représentation visuelle (30) du paramètre physique de transport au cours du temps, qu'on dit aussi au fin du temps, selon les directions déterminées de transport et des valeurs reçues de paramètre.

6. Procédé selon la revendication 5, dans lequel la transformation (1200) a lieu selon un facteur d'échelle reflétant la précision de la représentation polygonale, le procédé comprenant en outre :
la répétition (1250) de l'étape de transformation avec un facteur d'échelle modifié pour ajuster la précision de la représentation polygonale affectant le temps nécessaire pour produire la représentation visuelle des paramètres physiques.

7. Procédé selon l'une quelconque des revendications 5 à 6, dans lequel la représentation visuelle utilise une texture de surface s'écoulant dans le sens de transport.

8. Procédé selon la revendication 7, dans lequel la texture de surface d'écoulement est produite par déplacement d'une valeur de paramètre de visualisation de texture vers un sommet par la valeur de paramètre physique de transport correspondante dans la direction du transport.

9. Procédé selon l'une quelconque des revendications 5 à 6, dans lequel la représentation visuelle utilise un système de particules contenant des particules se déplaçant dans la direction de transport.

10. Procédé selon l'une quelconque des revendications 5 à 9, dans lequel les valeurs de paramètre au cours du temps sont reçues à partir de capteurs respectifs du système technique lors de son fonctionnement.

11. Procédé selon l'une quelconque des revendications 5 à 10, dans lequel les valeurs de paramètre au cours du temps sont reçues, par le biais d'une interface fonctionnelle de simulation ou par le biais d'une interface VDMA, à partir d'un système de simulation simulant le statut technique du système technique au fil du temps.

12. Procédé selon l'une quelconque des revendications 5 à 11, dans lequel un autre paramètre de statut technique est reçu, l'autre paramètre de statut technique caractérisant une autre dimension du statut technique de l'au moins un élément technique particulier, et l'autre paramètre de statut technique étant visualisé simultanément avec la représentation visuelle animée (30) dans une représentation visuelle combinée correspondante.

13. Produit de type programme informatique comportant des instructions qui quand elles sont chargées dans une mémoire d'un dispositif informatique et exécutées par au moins un processeur du dispositif informatique, amènent le dispositif informatique à exécuter les étapes du procédé implémenté sur ordinateur selon l'une quelconque des revendications 5 à 12.

FIG. 1

1000

```
                    ┌──────────────────────────┐
                    │  receive 3D CAD model with a │
                    │    symmetric component       │──── 1100
                    └──────────────────────────┘
                                │
                                ▼
                    ┌──────────────────────────┐
                    │  transform symmetric 3D CAD  │
                    │  model component into 3D     │──── 1200
                    │  polygonal  representation   │
                    └──────────────────────────┘
                                │
          1250                  ▼
                        ╱ ─ ─ ─ ─ ─ ─ ╲          1240
              NO      ╱   resolution     ╲──
              ◄─ ─ ─ ─    ok?             │
                        ╲               ╱
                          ╲ ─ ─ ─ ─ ─ ╱
                                │  YES
                                ▼
                    ┌──────────────────────────┐
                    │  associate monitoring function │
                    │    with the polygonal          │──── 1300
                    │    representation              │
                    └──────────────────────────┘
                                │
                                ▼
                    ┌──────────────────────────┐
                    │  determine propagation         │
                    │  direction for each vertex of  │
                    │  polygonal representation by   │──── 1400
                    │  using symmetric property      │
                    └──────────────────────────┘
                                │
                                ▼
                    ┌──────────────────────────┐
                    │  receive parameter values  over │
                    │            time                 │──── 1500
                    └──────────────────────────┘
                                │
                                ▼
                    ┌──────────────────────────┐
                    │  generate visual parameter      │
                    │  representation over time       │──── 1600
                    └──────────────────────────┘
```

# FIG. 2

FIG. 3

FIG. 4A

FIG. 4B

FIG. 4C

FIG. 4D

FIG. 5

FIG. 5A

FIG. 6

**EP 3 088 973 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009210071 A